# EUROPEAN PATENT APPLICATION

(11) **EP 4 654 716 A1**
(43) Date of publication of application: **26.11.2025**
(21) Application number: 23916702.6
(22) Date of filing: 17.01.2023
(51) Int. Cl.: H04W 72/1268

(54) **METHOD AND APPARATUS FOR SENDING UPLINK INFORMATION, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2023/072715
(87) International publication number: WO 2024/152212

(57) **Abstract**

Provided in the present disclosure are a method and apparatus for sending uplink information, and a readable storage medium. The method comprises: if a network device is in an effective time period of discontinuous transmission (DTX) on a first carrier, from a first time, stopping sending to the network device first-type uplink information corresponding to the first carrier. In the method of the present disclosure, according to an energy-saving mode of the network device during DTX, a user equipment may stop sending the first-type uplink information during the DTX, such that on the basis of energy saving of the network device, unnecessary uplink sending of the user equipment is reduced, thereby reducing the energy consumption of the user equipment.

## Description

### TECHNICAL FIELD

The present disclosure relates to the field of wireless communication technologies, and in particular to a method and apparatus for sending uplink information, and a readable storage medium.

### BACKGROUND

Network energy saving is a potential topic of Release 18 (R18) of the 3GPP protocol, which discusses how to save energy in base stations and networks. One possible way to save energy is the discontinuous transmission (DTX) mechanism of the base station. During DTX, the base station does not need to send certain downlink channels or downlink signals. For example, the base station will not send scheduling DCI during DTX. That is, the base station will not schedule the Physical Downlink Shared Channel (PDSCH).

### SUMMARY

The present disclosure provides a method and apparatus for sending uplink information, and a readable storage medium.

In a first aspect, the present disclosure provides a method for sending uplink information, which is performed by a user equipment, and the method includes:
in response to the network device being in an effective period of a discontinuous transmission (DTX) on a first carrier, stopping, from a first time, sending the first type of uplink information corresponding to the first carrier to the network device.

According to the method of the present disclosure, based on the energy-saving mode of the network device during DTX, the user equipment may stop sending the first type of uplink information during DTX, thereby reducing unnecessary uplink transmission from the user equipment on the basis of energy saving of the network device, and saving energy consumption of the user equipment.

In some implementations, the first time is one of the following:
the start time of the effective period; or
the time which is later than the start time by the first time interval.

In some implementations, the first type of uplink information includes at least one of the following:
a periodic Channel State Information (CSI) measurement report;
a semi-persistent CSI measurement report;
a periodic uplink Sounding Reference Signal (SRS);
a semi-persistent SRS; or
a Scheduling Request (SR).

In some implementations, the method further includes:
after the second time, resuming sending the second type of uplink information corresponding to the first carrier, where the second type of uplink information is all or some of the uplink information in the first type of uplink information.

In some implementations, when the first type of uplink information includes a semi-persistent CSI measurement report, the second type of uplink information does not include the semi-persistent CSI measurement report.

In some implementations, when the first type of uplink information includes a semi-persistent SRS, the second type of uplink information does not include the semi-persistent SRS.

In some implementations, when the first type of uplink information includes the CSI measurement report, the second time is one of the following:
the end time of the effective period; or
the time which is later than the end time by the second time interval.

In some implementations, when the first type of uplink information includes the SRS or SR, the second time is one of the following:
the end time of the effective period; or
the time earlier than the end time.

In some implementations, when the first type of uplink information includes a Scheduling Request (SR), stopping, from the first time, sending the first type of uplink information corresponding to the first carrier to the network device includes:
stopping, from the first time, sending the first-priority SR to the network device on the first carrier.

In some implementations, the Scheduling Request (SR) does not include the second-priority SR.

In some implementations, the method further includes:
in response to the user equipment sending the SR to the network device on the first carrier, monitoring, from the third time, the downlink information on the second carrier.

If the network device is in a DTX state on the second carrier before the third time, the SR sent by the user equipment is used to indicate that the user equipment expects the network device to end the DTX state on the second carrier at the third time.

In some implementations, the second carrier is one of the following:
the first carrier;
the main carrier corresponding to the user equipment; or
any carrier on which the user equipment needs to monitor the Physical Downlink Control Channel (PDCCH).

In some implementations, the third time is the time after the user equipment sends the SR on the first carrier.

In some implementations, the method further includes:
receiving indication information sent by the network device, where the indication information is used to indicate the effective period of the DTX.

In a second aspect, the present disclosure provides a method for receiving uplink information, which is performed by a network device, and the method includes:
in response to the effective period of the DTX on the first carrier, stopping, from the first time, receiving the first type of uplink information from the user equipment on the first carrier.

In some implementations, the first time is one of the following:
the start time of the effective period; or
the time which is later than the start time by the first time interval.

In some implementations, the first type of uplink information includes at least one of the following:
a periodic CSI measurement report;
a semi-persistent CSI measurement report;
a periodic SRS;
a semi-persistent SRS; or
a Scheduling Request (SR).

In some implementations, the method further includes:
after the second time, resuming receiving the corresponding second type of uplink information on the first carrier, where the second type of uplink information is all or some of the uplink information in the first type of uplink information.

In some implementations, when the first type of uplink information includes a CSI measurement report, the second time is one of the following:
the end time of the effective period; or
the time which is later than the end time by the second time interval.

In some implementations, when the first type of uplink information includes the SRS or SR, the second time is one of the following:
the end time of the effective period; or
the time earlier than the end time.

In some implementations, when the first type of uplink information includes a Scheduling Request (SR), stopping, from the first time, receiving the first type of uplink information from the user equipment on the first carrier includes:
stopping, from the first time, receiving the first-priority SR on the first carrier.

In some implementations, the method further includes:
receiving the second-priority SR sent by the user equipment on the first carrier.

In some implementations, the method further includes:
when receiving the SR sent by the user equipment, ending the DTX state on the second carrier at the third time, and sending downlink information on the second carrier from the third time.

In some implementations, the second carrier is one of the following:
the first carrier;
the main carrier corresponding to the user equipment; or
any carrier on which the user equipment needs to monitor the Physical Downlink Control Channel (PDCCH).

In some implementations, the third time is the time after the user equipment sends the SR on the first carrier.

In some implementations, the method further includes:
sending indication information to the user equipment, where the indication information is used to indicate the effective period of the DTX.

In a third aspect, the present disclosure provides an apparatus for sending uplink information, which may be used to accomplish the steps performed by the user equipment in the first aspect or any implementation(s) of the first aspect. The user equipment may implement the functions of the above method(s) in the form of hardware structure, software module, or hardware structure plus software module.

When the apparatus shown in the second aspect is implemented by a software module, the apparatus may include a transceiving module. The transceiving module may be used to support the communication device for communication.

When implementing the steps described in the first aspect, the transceiving module is configured to: stop, from the first time, sending the first type of uplink information corresponding to the first carrier to the network device, if the network device is in the effective period of the discontinuous transmission (DTX) on the first carrier.

In a fourth aspect, the present disclosure provides an apparatus for receiving uplink information, which may be used to accomplish the steps performed by the network device in the second aspect or any implementation(s) of the second aspect. The network device may implement the functions of the above method(s) in the form of hardware structure, software module, or hardware structure plus software module.

When the apparatus shown in the fourth aspect is implemented by a software module, the apparatus may include a transceiving module. The transceiving module may be used to support the communication device for communication.

When implementing the steps described in the second aspect, the transceiving module is configured to: stop, from the first time, receiving the first type of uplink information from the user equipment on the first carrier, in response to the effective period of the DTX on the first carrier.

In a fifth aspect, the present disclosure provides a user equipment, including a processor and a memory. The memory is used to store a computer program. The processor is used to execute the computer program to implement the first aspect or any implementation(s) of the first aspect.

In a sixth aspect, the present disclosure provides a network device, including a processor and a memory. The memory is used to store a computer program. The processor is used to execute the computer program to implement the second aspect or any implementation(s) of the second aspect.

In a seventh aspect, the present disclosure provides a computer-readable storage medium. The computer-readable storage medium stores instructions (or computer programs, programs). When the instructions are called and executed on a computer, the computer is caused to perform the first aspect or any implementation(s) of the first aspect.

In an eighth aspect, the present disclosure provides a computer-readable storage medium. The computer-readable storage medium stores instructions (or computer programs, programs). When the instructions are called and executed on a computer, the computer is caused to perform the first aspect or any implementation(s) of the first aspect.

It is to be understood that the foregoing general description and the following detailed description are examples and explanatory only, and are not restrictive of the present disclosure.

### BRIEF DESCRIPTION OF THE DRAWINGS

The drawings described herein are used to provide a further understanding of the embodiments of the present disclosure and constitute a part of the present application. The schematic implementations of the embodiments of the present disclosure and their descriptions are used to explain the embodiments of the present disclosure, and do not constitute any improper limitation on the embodiments of the present disclosure.

The drawings herein are incorporated into the specification and constitute a part of the specification, showing embodiments that conform to the embodiments of the present disclosure and are used together with the specification to explain the principles of the embodiments of the present disclosure.
Fig. 1 is a schematic architecture diagram of a wireless communication system provided by an embodiment of the present disclosure;
Fig. 2 is a flow chart of a method for sending uplink information according to an example embodiment;
Fig. 3 is a schematic diagram of a time-domain relationship according to an example embodiment;
Fig. 4 is a flow chart of another method for sending uplink information according to an example embodiment;
Fig. 5 is a flow chart of another method for sending uplink information according to an example embodiment;
Fig. 6 is a flow chart of another method for sending uplink information according to an example embodiment;
Fig. 7 is a flow chart of a method for receiving uplink information according to an example embodiment;
Fig. 8 is a flow chart of a method for sending uplink information according to an example embodiment;
Fig. 9 is a block diagram of an apparatus for sending uplink information according to an example embodiment;
Fig. 10 is a block diagram of a user equipment according to an example embodiment;
Fig. 11 is a block diagram of an apparatus for receiving uplink information according to an example embodiment;
Fig. 12 is a block diagram of a network device according to an example embodiment.

### DETAILED DESCRIPTION OF THE EMBODIMENTS

The embodiments of the present disclosure are now further described in conjunction with the drawings and specific embodiments.

The example embodiments will be described in detail here, and examples thereof are shown in the drawings. When the following description refers to the drawings, unless otherwise indicated, the same numbers in different drawings represent the same or similar elements. The implementations described in the following example embodiments do not represent all the implementations consistent with the embodiments of the present disclosure. Instead, they are only examples of apparatuses and methods consistent with some aspects of the present disclosure as detailed in the attached claims.

The terms used in the embodiments of the present disclosure are only for the purpose of describing specific embodiments, and are not intended to limit the embodiments of the present disclosure. The singular forms "one" and "the" used in the embodiments of the present disclosure and the attached claims are also intended to include plural forms, unless the context clearly indicates other meanings. It should also be understood that the term "and/or" used herein refers to and includes any or all possible combinations of one or more associated items as listed.

It should be understood that although the terms first, second, third, etc. may be used in the embodiments of the present disclosure to describe various information, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the words "if' and "in case of' as used herein may be interpreted as "at" or "when" or "in response to".

The embodiments of the present disclosure are described in detail below, and examples of the embodiments are shown in the accompanying drawings, where the same or similar reference numerals throughout represent the same or similar elements. The embodiments described below with reference to the accompanying drawings are examples, and are intended to be used to explain the present disclosure, and cannot be understood as limiting the present disclosure.

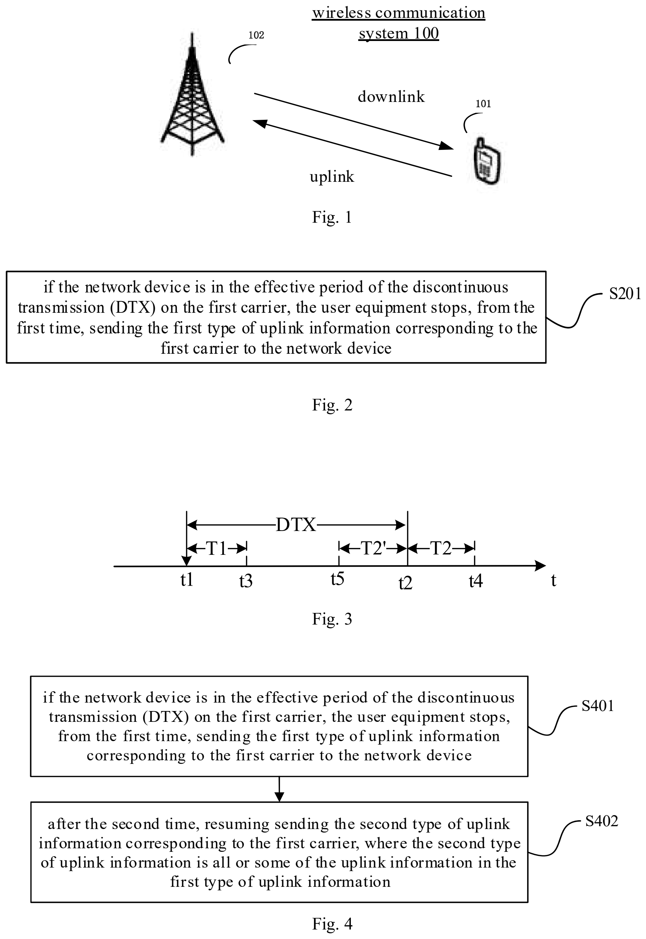

As shown in Fig. 1, a method for sending uplink information provided by an embodiment of the present disclosure may be applied to a wireless communication system 100, which may include a user equipment 101 and a network device 102. The user equipment 101 is configured to support carrier aggregation, and may be connected to multiple carrier units of the network device 102, including a main carrier unit and one or more auxiliary carrier units.

It should be understood that the above wireless communication system 100 may be applicable to both low-frequency scenarios and high-frequency scenarios. The application scenarios of the wireless communication system 100 include, but are not limited to, the Long Term Evolution (LTE) system, the LTE Frequency Division Duplex (FDD) system, the LTE Time Division Duplex (TDD) system, the worldwide interoperability for micro wave access (WiMAX) communication system, the Cloud Radio Access Network (CRAN) system, the future fifth generation (5G) system, the New Radio (NR) communication system or the future evolved Public Land Mobile Network (PLMN) system, etc.

The user equipment 101 shown above may be a terminal, an access terminal, a terminal unit, a terminal station, a Mobile Station (MS), a remote station, a remote terminal, a mobile terminal, a wireless communication device, a terminal agent, or a terminal device, etc. The user equipment 101 may have a wireless transceiving function, which may communicate with one or more network devices of one or more communication systems (such as wireless communication) and receive network services provided by the network devices, where the network devices include, but are not limited to, the illustrated network device 102.

The User Equipment (UE) 101 may be a cellular phone, a cordless phone, a Session Initiation Protocol (SIP) phone, a Wireless Local Loop (WLL) station, a Personal Digital Assistant (PDA) device, a handheld device with wireless communication function, a computing device or other processing device connected to a wireless modem, a vehicle-mounted device, a wearable device, a terminal device in a future 5G network, or a terminal device in a future evolved PLMN network, etc.

The network device 102 may be an access network device (or access network point). The access network device refers to a device that provides network access function, such as a Radio Access Network (RAN) base station, etc. The network device 102 may specifically include a Base Station (BS), or a base station and a wireless resource management device for controlling the base station, etc. The network device 102 may also include a relay station (relay device), an access point, a base station in a future 5G network, a base station in a future evolved PLMN network, or an NR base station, etc. The network device 102 may be a wearable device or a vehicle-mounted device. The network device 102 may also be a communication chip having a communication module.

For example, the network device 102 includes, but is not limited to, the next generation base station (gnodeB, gNB) in 5G, the evolved node B (eNB) in the LTE system, the Radio Network Controller (RNC), the node B (NB) in the WCDMA system, the wireless controller under the CRAN system, the base station controller (BSC), the base transceiver station (BTS) in the GSM system or the CDMA system, the home base station (for example, home evolved nodeB, or home node B, HNB), the baseband unit (BBU), the transmitting and receiving point (TRP), the transmitting point (TP), or the mobile switching center, etc.

During DTX (referred to as the effective period of the DTX in the embodiments of the present disclosure), the network device 102 will neither send certain downlink channels or downlink signals, nor perform data scheduling. Therefore, during the effective period, the network device 102 may not need to know the channel status of the user equipment 101. Therefore, during the effective period, it is not necessary for the user equipment 101 to send relevant uplink information to the network device 102.

The embodiments of the present disclosure provide a method for sending uplink information, which is performed by the user equipment 101. Reference may be made to Fig. 2, which is a method for sending uplink information according to an example embodiment. As shown in Fig. 2, the method includes step S201.

In step S201, if the network device 102 is in the effective period of the discontinuous transmission (DTX) on the first carrier, the user equipment 101 stops, from the first time, sending the first type of uplink information corresponding to the first carrier to the network device 102.

In some implementations, in combination with Fig. 3, the effective period of the DTX is, for example, between time t1 and t2.

During the effective period of the DTX, the network device 102 will neither send certain downlink channels or downlink signals, nor perform data scheduling. Therefore, the effective period of the DTX may be recorded as the DTX-off period.

It can be understood that the embodiments of the present disclosure describe the relevant implementations of the user equipment 101 during the DTX-off period. The period, during which the network device 102 can normally send downlink information within DTX, may be recorded as the DTX-on period, and this period is not limited in the embodiments of the present disclosure. In addition, the network device 102 may also include a discontinuous reception (DRX) energy-saving state. The period, during which uplink information is stopped from being received within DRX, is recorded as the DRX-off period. The period, during which uplink information can be normally received within DRX, may be recorded as the DRX-on period.

In some implementations, the first time is within the effective period of the DTX, such as in [t1, t2].

In some implementations, the first type of uplink information may include an uplink channel or uplink signal related to the channel measurement.

In some implementations, for multiple service carriers of a user equipment, each carrier may be configured or indicated with a corresponding effective period of DTX, or may not be configured with DTX. The first carrier may represent a carrier configured with DTX.

In an embodiment of the present disclosure, according to the energy-saving mode of the network device during DTX, the user equipment 101 may stop sending the first type of uplink information during DTX, thereby reducing unnecessary uplink transmission from the user equipment 101 on the basis of energy saving of the network device 102, and saving energy consumption of the user equipment 101.

The embodiments of the present disclosure provide a method for sending uplink information, which is performed by the user equipment 101. The method includes step S201.

In step S201, if the network device 102 is in the effective period of the discontinuous transmission (DTX) on the first carrier, the user equipment 101 stops, from the first time, sending the first type of uplink information corresponding to the first carrier to the network device 102.

The first time is one of the following:
the start time of the effective period; or
the time which is later than the start time by the first time interval.

In some implementations, still referring to Fig. 3, the effective period of DTX is, for example, between time t1 and t2.

In some implementations, when the first time is the start time of the effective period, that is, when the first time is t1, the user equipment 101 may stop, from t1, sending the first type of uplink information to the network device 102 on the first carrier.

In some implementations, when the first time is later than the start time by the first time interval, for example, at t3 which is later than t1 by the first time interval T1, the user equipment 101 may stop, from t3, sending the first type of uplink information to the network device 102 on the first carrier.

In some implementations, the first time interval T1 may be used to meet the requirements for the sampling duration or the number of sampling points in the measurement scenario. According to the definition of the relevant protocol, in the process of acquiring the measurement result of each Reference Signal (RS), the acquisition is necessary to be based on the measurement of the RS sampling point during a set period.

In an example, in the scenario where the first type of uplink information includes the RS measurement report related to the channel measurement, the measurement report may be reported at the corresponding time point according to a certain period. In a measurement report scenario at time t3, which is later than time t1 by the first time interval T1, or in a measurement report scenario earlier than t3, the user equipment 101 has measured the RS before t1, and the sampling duration or number of sampling points required for measurement has been reached at t1. At this time, the user equipment 101 may send a channel measurement report before time t3, which is later than t1 by the first time interval T1, and then stop sending the measurement report (that is, the first type of uplink information) after the time t3. It can be understood that the network device 102 stops sending certain downlink information during DTX, but may still receive the measurement report sent by the user equipment 101. In this scenario, the user equipment 101 obtains enough sampling points before t1 to ensure the validity of the measurement report reported before t3. Otherwise, the measurement report may be invalid.

In an embodiment of the present disclosure, when the network device 102 is in the effective period of DTX, the user equipment 101 may stop sending the first type of uplink information from the start time of the effective period, or stop sending the first type of uplink information after a time which is later than the start time by the first time interval.

The embodiments of the present disclosure provide a method for sending uplink information, which is performed by the user equipment 101. The method includes step S201.

In step S201, if the network device 102 is in the effective period of the discontinuous transmission (DTX) on the first carrier, the user equipment 101 stops sending, from the first time, the first type of uplink information corresponding to the first carrier to the network device 102.

The first type of uplink information includes at least one of the following:
a periodic Channel State Information (CSI) measurement report;
a semi-persistent CSI measurement report;
a periodic uplink Sounding Reference Signal (SRS);
a semi-persistent SRS; or
a Scheduling Request (SR).

In some implementations, according to the reporting mode of the Channel State Information report (CSI report) reported by the user equipment 101, the CSI measurement report may include three types: a periodic CSI measurement report, a semi-persistent CSI measurement report, and a non-periodic CSI measurement report.

### Periodic CSI measurement report

The network device 102 may send the configuration of the CSI measurement report through high-level signaling, and the user equipment 101 periodically reports the CSI measurement report according to the configuration of the network device 102.

### Semi-persistent CSI measurement report

The network device 102 may send down the configuration of the CSI measurement report, and may activate and deactivate the configuration of the CSI measurement report through Downlink Control Information (DCI) or Media Access Control Control Element (MAC CE) signaling. In the activated state, the user equipment 101 reports the CSI measurement report according to the configuration of the CSI measurement report. In the deactivated state, the configuration of the CSI measurement report is invalid.

### Non-periodic CSI measurement report

The network device 102 dynamically schedules the CSI measurement report through DCI. That is, when receiving the scheduling of the network device 102, the user equipment 101 reports the non-periodic CSI measurement report.

In some implementations, the user equipment 101 may perform CSI measurement according to the configuration of the CSI resource and report according to the configuration of the CSI measurement report (CSI Report). The configuration of the CSI resource may indicate the signals or resources involved in the CSI measurement by the user equipment 101, such as the CSI-RS to be measured or the CSI-IM for interference measurement. The configuration of the CSI measurement report may indicate the reporting mode and reporting parameters of the user equipment 101 after the CSI measurement.

In some implementations, when the first type of uplink information includes a periodic CSI measurement report and/or a semi-persistent CSI measurement report, the first time may be the start time of the effective period, or the time which is later than the start time by the first time interval. As shown in Fig. 3, the first time may be t1, or t3 which is later than t1 by the first time interval T1.

In some implementations, according to the sending mode of the uplink Sounding Reference Signal (SRS) sent by the user equipment 101, the SRS may include three types: a periodic SRS, a semi-persistent SRS, and a non-periodic SRS.

### Periodic SRS

The network device 102 configures the periodic SRS through high-level signaling. The user equipment 101 periodically sends the SRS according to the configuration of the network device 102.

### Semi-persistent SRS

The network device 102 activates or deactivates the configuration of the SRS. In the activated state, the user equipment 101 sends the SRS according to the configuration of the SRS. In the deactivated state, the configuration of the SRS is invalid.

### Non-periodic SRS

The network device 102 dynamically schedules the SRS through the DCI. For example, the user equipment 101 sends the SRS according to the scheduling of the network device 102.

In some implementations, the user equipment 101 sends the SRS to the network device 102, and the network device 102 evaluates the uplink channel status according to the received SRS.

In some implementations, when the first type of uplink information includes a periodic SRS and/or a semi-persistent SRS, the first time may be the start time of the effective period. As shown in Fig. 3, the first time may be t1.

In some implementations, when the user equipment 101 needs to send uplink data, it may send a Scheduling Request (SR) to the network device 102. After receiving the SR, the network device 102 may schedule the user equipment 101.

In some implementations, SR may also be configured with different priorities, and the implementation(s) may refer to the description of the following embodiment(s).

In some implementations, when the first type of uplink information includes SR, the first time may be the start time of the effective period. Referring to Fig. 3, the first time may be t1.

To facilitate understanding of the embodiments of the present disclosure, some specific examples are listed below.

### Example 1

The first type of uplink information includes a periodic CSI measurement report, and/or a semi-persistent CSI measurement report.

In this example, when the network device 102 is in DTX, the user equipment 101 stops, from the first time, sending the periodic CSI measurement report and/or the semi-persistent CSI measurement report corresponding to the first carrier to the network device 102.

Still referring to Fig. 3, the first time may be t1, or t3 which is later than t1 by the first time interval T1.

### Example 2

The first type of uplink information includes a periodic SRS and/or a semi-persistent SRS.

In this example, when the network device 102 is in DTX, the user equipment 101 stops, from the first time, sending the periodic SRS and/or the semi-persistent SRS corresponding to the first carrier to the network device 102.

Still referring to Fig. 3, the first time may be t1.

### Example 3

The first type of uplink information includes the following: a periodic CSI measurement report and/or a semi-persistent CSI measurement report, and a periodic SRS and/or a semi-persistent SRS. In this example, the first type of uplink information does not include SR.

In this example, when the network device 102 is in DTX, in combination with Fig. 3, the user equipment 101 stops, from the first time t1 or t3, sending the periodic CSI measurement report and/or the semi-persistent CSI measurement report corresponding to the first carrier to the network device 102. Alternatively, the user equipment 101 stops, from the first time t1, sending the periodic SRS and/or the semi-persistent SRS corresponding to the first carrier to the network device 102.

When there is a demand for sending uplink data, the user equipment 101 may still send SR during DTX.

### Example 4

The first type of uplink information includes SR, and may also include a periodic CSI measurement report and/or a semi-persistent CSI measurement report, as well as a periodic SRS and/or a semi-persistent SRS.

In this example, when the network device 102 is in DTX, the user equipment 101 stops, from the first time, sending the first type of uplink information corresponding to the first carrier to the network device 102. For example, as shown in Fig. 3, the user equipment 101 stops sending the CSI measurement report and/or the semi-persistent CSI measurement report at the first time t1 or t3, stops sending the periodic SRS and/or the semi-persistent SRS at the first time t1, and stops sending SR at the first time t1.

In an embodiment of the present disclosure, when the network device 102 is in the effective period of DTX, the user equipment 101 may skip the transmission of first types of different uplink information to reduce unnecessary uplink transmission.

The embodiments of the present disclosure provide a method for sending uplink information, which is performed by the user equipment 101. Reference may be made to Fig. 4, which is a method for sending uplink information according to an example embodiment. As shown in Fig. 4, the method includes steps S401 to S402.

In step S401, if the network device 102 is in the effective period of the discontinuous transmission (DTX) on the first carrier, the user equipment 101 stops, from the first time, sending the first type of uplink information corresponding to the first carrier to the network device 102.

In some implementations, the first time may be the start time of the effective period, or the time which is later than the start time by the first time interval. As shown in Fig. 3, the first time is time t1 or time t3.

In some implementations, the first type of uplink information includes at least one of the following: a periodic CSI measurement report, a semi-persistent CSI measurement report, a periodic SRS, a semi-persistent SRS, or an SR.

In an example, when the first type of uplink information includes a periodic CSI measurement report and/or a semi-persistent CSI measurement report, the first time may be t1 shown in Fig. 3, or t3 which is later than t1 by the first time interval T1.

In an example, when the first type of uplink information includes a periodic SRS and/or a semi-persistent SRS, the first time may be the start time of the effective period, referring to the time t1 shown in Fig. 3.

In an example, when the first type of uplink information includes SR, the first time may be t1 shown in Fig. 3.

In step S402, after the second time, the user equipment 101 resumes sending the second type of uplink information corresponding to the first carrier, where the second type of uplink information is all or some of the uplink information in the first type of uplink information.

In some implementations, when the first type of uplink information includes the CSI measurement report, the second time is one of the following:
the end time of the effective period; or
the time which is later than the end time by the second time interval.

Still referring to Fig. 3, the effective period of DTX is, for example, between time t1 and t2.

When the first type of uplink information includes a CSI measurement report, the first time may be the start time t1, or the time t3 which is later than the start time t1 by the first time interval T1.

The second time may be the end time t2, or the time t4 which is later than the end time t2 by the second time interval T2.

In some implementations, when the first type of uplink information includes SRS or SR, the second time is one of the following:
the end time of the effective period; or
the time earlier than the end time.

Still referring to Fig. 3, when the first type of uplink information includes SRS, the first time may be t1, and the second time may be t2 or t5 which is earlier than t2 by a time interval T2'.

When the second time is t5, the user equipment 101 may send SRS before the end time t2 of DTX, and the network device 102 in the DTX state may receive the SRS, so that the network device 102 can obtain the uplink channel status based on the SRS as soon as possible. Then, after the end time t2 of DTX, the network device 102 may quickly schedule according to the predetermined uplink channel status, thereby improving communication efficiency and helping reducing latency.

Alternatively, when the second time is t5, the user equipment 101 may send an SR before the end time t2 of DTX, and the network device 102 in the DTX state may receive the SR. Thus, the network device 102 can prepare for uplink scheduling in advance, and can send the DCI for uplink scheduling as soon as possible after the effective period of DTX ends.

In some implementations, in combination with Fig. 3, in a scenario where the first type of uplink information includes a CSI measurement report and the second time is t4, the network device 102 has resumed the sending or scheduling of downlink information at t2, but the user equipment 101 needs to measure in a sufficiently long period to meet the requirements of the measurement duration or the number of sampling points. Therefore, the time when the user equipment 101 can normally resume sending the CSI measurement report is later than t4, where t4 is later than the end time t2 of DTX by the second time interval T2.

In some implementations, when the second type of uplink information is all of the first type of uplink information, for all the first type of uplink information that is stopped from being sent during DTX, the user equipment 101 resumes sending all the first type of uplink information after the second time.

Two specific examples are listed below.

### Example 1

The first type of uplink information includes a periodic CSI measurement report and a semi-persistent CSI measurement report.

In this example, when the network device 102 is in DTX, the user equipment 101 stops, from the first time, sending the periodic CSI measurement report and the semi-persistent CSI measurement report corresponding to the first carrier to the network device 102. As shown in Fig. 3, the first time may be the start time t1, or the time t3 which is later than the start time t1 by the first time interval T1.

After the second time, the user equipment 101 may resume sending the periodic CSI measurement report and the semi-persistent CSI measurement report corresponding to the first carrier to the network device 102. The second time may be the end time t2, or the time t4 which is later than the end time t2 by the second time interval T2.

### Example 2

The first type of uplink information includes a periodic SRS and a semi-persistent SRS.

In this example, when the network device 102 is in DTX, the user equipment 101 stops, from the first time, sending the periodic SRS and the semi-persistent SRS corresponding to the first carrier to the network device 102. As shown in Fig. 3, the first time may be t1.

After the second time, the user equipment 101 may resume sending the periodic SRS and the semi-persistent SRS to the network device 102 on the first carrier. The second time may be the end time t2, or the time t5 earlier than t2.

In some implementations, when the second type of uplink information is some of the first type of uplink information, for all the first type of uplink information that is stopped from being sent during DTX, the user equipment 101 resumes sending some of the first type of uplink information after the second time.

In an example, when the first type of uplink information includes the semi-persistent CSI measurement report, the second type of uplink information does not include the semi-persistent CSI measurement report.

In this example, for the semi-persistent CSI measurement report that is stopped from being sent during DTX, the configuration corresponding to the semi-persistent CSI measurement report is deemed to be deactivated. Therefore, after the second time, the user equipment 101 will not resume reporting the semi-persistent CSI measurement report.

The following is a specific example.

The first type of uplink information includes a periodic CSI measurement report and a semi-persistent CSI measurement report.

In this example, when the network device 102 is in DTX, the user equipment 101 stops, from the first time, sending the periodic CSI measurement report and the semi-persistent CSI measurement report corresponding to the first carrier to the network device 102. As shown in Fig. 3, the first time may be t1, or t3 which is later than t1 by the first time interval T1.

After the second time, the user equipment 101 may resume sending the periodic CSI measurement report corresponding to the first carrier to the network device 102, but will not resume reporting the semi-persistent CSI measurement report. The second time may be the end time t2, or the time t4 which is later than the end time t2 by the second time interval T2.

In an example, when the first type of uplink information includes the semi-persistent SRS, the second type of uplink information does not include the semi-persistent SRS.

In this example, for the semi-persistent SRS that is stopped from being sent during DTX, the configuration corresponding to the semi-persistent SRS is deemed to be deactivated. Therefore, after the second time, the user equipment 101 will not resume sending the semi-persistent SRS.

The following is a specific example.

The first type of uplink information includes a periodic SRS and a semi-persistent SRS.

In this example, when the network device 102 is in DTX, the user equipment 101 stops, from the first time, sending the periodic SRS and the semi-persistent SRS corresponding to the first carrier to the network device 102. As shown in Fig. 3, the first time may be t1.

After the second time, the user equipment 101 may resume sending the periodic SRS to the network device 102 on the first carrier, but will not resume sending the semi-persistent SRS. The second time may be the end time t2, or the time t5 earlier than t2.

In an embodiment of the present disclosure, after the DTX period ends, the user equipment 101 may resume sending some or all of the first type of uplink information to facilitate timely communication with the network device 102.

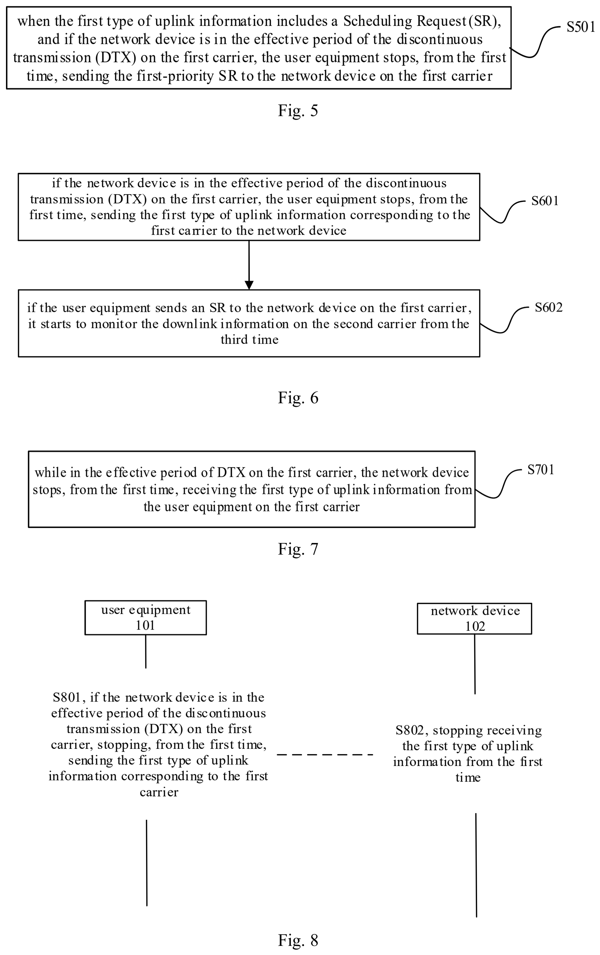

The embodiments of the present disclosure provide a method for sending uplink information, which is performed by the user equipment 101. Reference may be made to Fig. 5, which is a method for sending uplink information according to an example embodiment. As shown in Fig. 5, the method includes step S501.

In step S501, when the first type of uplink information includes a Scheduling Request (SR), and if the network device 102 is in the effective period of the discontinuous transmission (DTX) on the first carrier, the user equipment 101 stops, from the first time, sending the first-priority SR to the network device 102 on the first carrier.

In some implementations, the first priority may represent an SR with a priority lower than the set priority, that is, a lower-priority SR.

In some implementations, the priority of SR may be configured by the base station.

In this implementation, during the effective period of DTX, the user equipment 101 may stop sending the first-priority SR from the first time.

In this implementation, for the second-priority SR, the user equipment 101 may also stop the sending, or may not stop sending the second-priority SR.

In some implementations, the Scheduling Request (SR) does not include the second-priority SR. That is, the SR in the first type of uplink information only includes the first-priority SR, and does not include the second-priority SR.

In this implementation, during the effective period of DTX, the user equipment 101 is only involved in stopping sending the first-priority SR, and not in stopping sending the second-priority SR.

In this implementation, when the user equipment 101 needs to send a high-priority uplink service, the second-priority SR may still be normally sent during the effective period of DTX, so that the network device 102 is notified to schedule as soon as possible.

In other implementations, the user equipment 101 may also stop sending all the SRs.

According to an embodiment of the present disclosure, in a scenario where the first type of uplink information includes SR, the user equipment 101 may consider the priority of SR and reasonably stop sending the low-priority SR during the effective period of DTX without interfering with the sending of the high-priority SR. Thereby, unnecessary uplink transmission can be reduced, and good communication effect and transmission delay can be maintained.

The embodiments of the present disclosure provide a method for sending uplink information, which is performed by the user equipment 101. Reference may be made to Fig. 6, which is a method for sending uplink information according to an example embodiment. As shown in Fig. 6, the method includes steps S601 to S602.

In step S601, if the network device 102 is in an effective period of a discontinuous transmission (DTX) on the first carrier, the user equipment 101 stops, from the first time, sending the first type of uplink information corresponding to the first carrier to the network device 102.

In step S602, if the user equipment 101 sends an SR to the network device 102 on the first carrier, it starts to monitor the downlink information on the second carrier from the third time.

If the network device is in the DTX state on the second carrier before the third time, the SR sent by the user equipment 101 is used to indicate that the user equipment 101 has a request for uplink transmission, and thus expects the network device 102 to end the DTX state on the second carrier at the third time, that is, end the state where downlink information is not sent on the second carrier.

In some implementations, the first time may be the start time of the effective period of DTX, or the time which is later than the start time by the first time interval. As shown in Fig. 3, the first time may be t1.

In some implementations, the embodiments of the present disclosure are applicable to scenarios where the first type of uplink information does not include SR or does not include the high-priority SR. For example, the first type of uplink information includes at least one of the following: a periodic CSI measurement report, a semi-persistent CSI measurement report, a periodic SRS, or a semi-persistent SRS.

In this implementation, the user equipment 101 will not stop sending SR during the effective period of DTX.

In this implementation, the user equipment 101 may send SR to the network device 102 as long as there is a demand for uplink data transmission. The SR may be either the first-priority SR or the second-priority SR. After receiving the SR, the network device 102 may schedule the user equipment 101.

In some implementations, the embodiments of the present disclosure are applicable to scenarios where the first type of uplink information only includes the first-priority SR, but does not include the second-priority SR. For example, the first type of uplink information includes at least the first-priority SR, and may also include at least one of the following: a periodic CSI measurement report, a semi-persistent CSI measurement report, a periodic SRS, or a semi-persistent SRS.

In this implementation, the user equipment 101 stops sending the first-priority SR during the effective period of DTX, but does not stop sending the second-priority SR.

In this implementation, when the user equipment 101 has the demand for transmitting the high-priority uplink service, the second-priority SR may be sent to the network device 102. After receiving the SR, the network device 102 may schedule the user equipment 101.

In some implementations, if the user equipment 101 sends the SR on the first carrier, after receiving the SR, the network device 102 may send the scheduling DCI on the first carrier or on other carriers (such as the main carrier) other than the first carrier to schedule the user equipment 101. Therefore, the second carrier may be the same as or different from the first carrier.

In some implementations, the second carrier is one of the following:
the first carrier;
the main carrier corresponding to the user equipment; or
any carrier on which the user equipment needs to monitor the Physical Downlink Control Channel (PDCCH).

In this implementation, the second carrier may be the same as or different from the first carrier.

In this implementation, when the second carrier is different from the first carrier, the second carrier may also be configured with a corresponding DTX, or may not be configured with DTX. In addition, in the scenario where the second carrier is configured with the corresponding DTX, the third time may be within the effective period of DTX for the second carrier, or the third time is outside the effective period of DTX for the second carrier, or the second carrier is in the DTX end state at the third time, or the second carrier is not in the DTX state at the third time.

The second carrier in the DTX state corresponds to the state in which the network device 102 does not send certain downlink information during the effective period of DTX, and expressions of the DTX end state or not in the DTX state correspond to the state in which the network device 102 normally sends downlink information. Downlink information includes, for example, PDCCH and CSI-RS.

In this implementation, if the second carrier is configured with DTX and is in the DTX state at the third time, after the user equipment 101 sends SR in step S602, it is considered that the DTX state will end at the third time, and the downlink information may be monitored normally.

After receiving the SR, the network device 102 learns that the user equipment 101 expects the network device 102 to end the DTX state on the second carrier at the third time, and the network device 102 may end the DTX state on the second carrier at the third time, that is, send downlink information from the third time. It can be understood that the third time or the way for determining the third time may be defined by a protocol, so that the network device 102 and the user equipment 101 can know the same third time.

In some implementations, the third time is the time after the user equipment 101 sends the SR on the first carrier.

In this implementation, the third time may be a slot next to the time when the user equipment 101 sends the SR.

In this implementation, the third time may be a time which is later than the time, when the user equipment 101 sends the SR, by a set time interval.

In an embodiment of the present disclosure, when there is a need to send uplink data, the user equipment 101 may send an SR to the network device 102 to expect the network device 102 to end the DTX state, thereby improving communication efficiency.

The embodiments of the present disclosure provide a method for sending uplink information, which is performed by the user equipment 101. The method includes steps S400 to S401.

In step S400, the user equipment 101 receives indication information sent by the network device 102, where the indication information is used to indicate the effective period of DTX.

In some implementations, the network device 102 may send the configuration information of DTX through high-level signaling. For example, the network device 102 semi-statically configures the configuration information of DTX through RRC signaling or MAC-CE signaling.

In some implementations, the network device 102 may dynamically indicate the configuration information of DTX through DCI.

In some implementations, the configuration information of DTX may include the period of DTX, the duration corresponding to the effective period, the start offset value, etc.

In some implementations, the user equipment 101 obtains the effective period of DTX based on the received indication information.

In step S401, if network device 102 is in the effective period of the discontinuous transmission (DTX) on the first carrier, the user equipment 101 stops, from the first time, sending the first type of uplink information corresponding to the first carrier to the network device 102.

In an embodiment of the present disclosure, the user equipment 101 may receive the indication information sent by the network device 102, and obtain the effective period of DTX according to the indication information, so as to stop sending the first type of uplink information at an appropriate time.

The embodiments of the present disclosure provide a method for receiving uplink information, which is performed by the network device 102. Reference may be made to Fig. 7, which is a method for receiving uplink information according to an example embodiment. As shown in Fig. 7, the method includes step S701.

In step S701, while in the effective period of DTX on the first carrier, the network device 102 stops, from the first time, receiving the first type of uplink information from the user equipment 101 on the first carrier.

In some implementations, in combination with Fig. 3, the effective period of DTX is, for example, between time t1 and t2. During the effective period of DTX, the network device 102 will neither send certain downlink channels or downlink signals, nor perform data scheduling.

In some implementations, in combination with the method by the user equipment 101, the user equipment 101 will not send the first type of uplink information during the effective period. Accordingly, the network device 102 does not monitor or demodulate the first type of uplink information to save operations at the network side and energy consumption.

In some implementations, the first type of uplink information may include an uplink channel or an uplink signal related to channel measurement.

In an embodiment of the present disclosure, when the network device 102 is in the effective period of DTX, the network device 102 may stop receiving the first type of uplink information, further saving the energy consumption of the network device 102.

The embodiments of the present disclosure provide a method for receiving uplink information, which is performed by the network device 102. The method includes step S701.

In step S701, when the first carrier is in the effective period of DTX, the network device 102 stops, from the first time, receiving the first type of uplink information from the user equipment 101 on the first carrier.

The first time is one of the following:
the start time of the effective period; or
the time which is later than the start time by the first time interval.

In an embodiment of the present disclosure, in combination with the description of the above embodiment(s) and the schematic diagram in Fig. 3, the user equipment 101 may stop, at time t1 or t3, sending the first type of uplink information to the network device 102 on the first carrier, and the network device 102 may stop, from time t1 or t3, receiving the first type of uplink information on the first carrier.

The embodiments of the present disclosure provide a method for receiving uplink information, which is performed by the network device 102. The method includes step S701.

In step S701, when the first carrier is in the effective period of DTX, the network device 102 stops, from the first time, receiving the first type of uplink information from the user equipment 101 on the first carrier.

The first type of uplink information includes at least one of the following:
a periodic CSI measurement report;
a semi-persistent CSI measurement report;
a periodic SRS;
a semi-persistent SRS; or
a Scheduling Request (SR).

In some implementations, when the first type of uplink information includes a periodic CSI measurement report and/or a semi-persistent CSI measurement report, the first time may be the start time of the effective period, or the time which is later than the start time by the first time interval. Referring to Fig. 3, the first time may be t1, or t3 which is later than t1 by the first time interval T1.

In some implementations, when the first type of uplink information includes a periodic SRS and/or a semi-persistent SRS, the first time may be the start time of the effective period. Referring to Fig. 3, the first time may be t1.

In some implementations, when the user equipment 101 has the demand for transmitting uplink data, it may send an SR to the network device 102. After receiving the SR, the network device 102 may schedule the user equipment 101.

In some implementations, when the first type of uplink information includes an SR, the first time may be the start time of the effective period. Referring to Fig. 3, the first time may be t1.

In an embodiment of the present disclosure, corresponding to first types of different uplink information, the network device 102 may stop, from the corresponding first time, receiving the first type of uplink information, which further saves energy consumption.

The embodiments of the present disclosure provide a method for receiving uplink information, which is performed by the network device 102. The method includes steps S701~S702.

In step S701, when the first carrier is in the effective period of DTX, the network device 102 stops, from the first time, receiving the first type of uplink information from the user equipment 101 on the first carrier.

In step S702, after the second time, the network device 102 resumes receiving the corresponding second type of uplink information on the first carrier, where the second type of uplink information is all or some of the uplink information in the first type of uplink information.

In some implementations, when the first type of uplink information includes a CSI measurement report, the second time is one of the following:
the end time of the effective period; or
the time which is later than the end time by the second time interval.

As shown in Fig. 3, when the first type of uplink information includes a CSI measurement report, the first time may be the start time t1, or the time t3 which is later than the start time t1 by the first time interval T1. The second time may be the end time t2, or the time t4 which is later than the end time t2 by the second time interval T2.

In some implementations, when the first type of uplink information includes SRS or SR, the second time is one of the following:
the end time of the effective period; or
the time earlier than the end time.

As shown in Fig. 3, when the first type of uplink information includes SRS, the first time may be t1, and the second time may be t2 or t5 which is earlier than t2 by an interval duration T2'.

The user equipment 101 may send SRS before the end time t2 of DTX, and the network device 102 in the DTX state may receive the SRS, so that the network device 102 can obtain the uplink channel status based on the SRS as soon as possible. Then, after the end time t2 of DTX, the network device 102 may quickly schedule according to the predetermined uplink channel status, improving communication efficiency and helping reducing latency.

Alternatively, the user equipment 101 may send an SR before the end time t2 of DTX, and the network device 102 in the DTX state may receive the SR. Thus, the network device 102 may prepare for uplink scheduling in advance, and may send the DCI for uplink scheduling as soon as possible after the effective period of DTX ends.

The embodiments of the present disclosure provide a method for receiving uplink information, which is performed by the network device 102. The method includes step S701'.

In step S701', when the first type of uplink information includes a Scheduling Request (SR), and the first carrier is in the effective period of DTX, the network device 102 stops, from the first time, receiving the first-priority SR on the first carrier.

In some implementations, the first priority may represent a lower-priority SR. The second priority may represent a higher-priority SR.

In some implementations, the method in this embodiment may also include the following step S703.

In step S703, the network device 102 receives the second-priority SR sent by the user equipment on the first carrier.

In this implementation, during the effective period of DTX, the user equipment 101 will not stop sending the second-priority SR. When there is a demand for the high-priority service, the user equipment 101 may send the corresponding second-priority SR. The network device 102 receives the second-priority SR. After receiving the SR, the network device 102 may schedule the user equipment 101.

In an embodiment of the present disclosure, in the scenario where the first type of uplink information includes SR, the network device 102 may consider the priority of SR, stop receiving the low-priority SR in the effective period of DTX, and still keep receiving the high-priority SR, so that timely scheduling can be performed on the basis of energy saving.

The embodiments of the present disclosure provide a method for receiving uplink information, which is performed by the network device 102. The method includes steps S701 and S703.

In step S701, while in the effective period of DTX on the first carrier, the network device 102 stops, from the first time, receiving the first type of uplink information from the user equipment 101 on the first carrier.

In step S703, when receiving the SR sent by the user equipment 101, the network device 102 ends the DTX state on the second carrier at the third time, and sends downlink information on the second carrier from the third time.

In some implementations, if the network device 102 is in a DTX state on the second carrier before the third time, the SR sent by the user equipment 101 is used to indicate that the user equipment 101 has an uplink transmission request, and thus expects the network device 102 to end the DTX state on the second carrier at the third time, that is, to end the state where downlink information is not sent on the second carrier.

After receiving the SR, the network device 102 learns that the user equipment 101 expects the network device 102 to end the DTX state on the second carrier at the third time, and the network device 102 may end the DTX state on the second carrier at the third time, that is, start sending downlink information from the third time.

In some implementations, the second carrier is one of the following:
the first carrier;
the main carrier corresponding to the user equipment; or
any carrier on which the user equipment needs to monitor the Physical Downlink Control Channel (PDCCH).

In this implementation, the second carrier may be the same as the first carrier or different from the first carrier.

In some implementations, the third time is the time after the user equipment 101 sends the SR on the first carrier.

In this implementation, the third time may be a slot next to the time when the user equipment 101 sends the SR.

In this implementation, the third time may be a time which is later than the time, when the user equipment 101 sends the SR, by a set time interval.

It can be understood that the third time or the way for determining the third time may be defined by a protocol, so that the network device 102 and the user equipment 101 can know the same third time.

In an embodiment of the present disclosure, when receiving the SR sent by the user equipment 101, the network device 102 indicates that the user equipment 101 has a need to send uplink data. Thus, the network device 102 can end the DTX state in time, so that the user equipment 101 can be scheduled in time to improve communication efficiency.

The embodiments of the present disclosure provide a method for receiving uplink information, which is performed by the network device 102. The method includes steps S700 and S701.

In step S700, the network device 102 sends indication information to the user equipment 101, where the indication information is used to indicate the effective period of DTX.

In some implementations, the network device 102 may send the configuration information of DTX through high-level signaling. For example, the network device 102 semi-statically configures the configuration information of DTX through RRC signaling or MAC-CE signaling.

In some implementations, the network device 102 may indicate the configuration information of DTX dynamically through DCI.

In some implementations, the configuration information of DTX may include the period of DTX, the duration corresponding to the effective period, the start offset value, etc.

In some implementations, the user equipment 101 learns the effective period of DTX according to the received indication information.

In step S701, while in the effective period of DTX on the first carrier, the network device 102 stops, from the first time, receiving the first type of uplink information from the user equipment 101 on the first carrier.

In an embodiment of the present disclosure, the network device 102 may send the effective period of DTX to the user equipment 101 by sending indication information, so that the UE can stop sending the first type of uplink information at an appropriate time.

The embodiments of the present disclosure provide a method for transmitting uplink information. Reference may be made to Fig. 8, which is a method for transmitting uplink information according to an example embodiment. As shown in Fig. 8, the method includes steps S801 to S802.

In step S801, if the network device 102 is in the effective period of the discontinuous transmission (DTX) on the first carrier, the user equipment 101 stops, from the first time, sending the first type of uplink information corresponding to the first carrier to the network device 102.

In step S802, the network device 102 stops receiving the first type of uplink information from the first time.

In an embodiment of the present disclosure, according to the energy-saving mode of the network device during DTX, the user equipment 101 may stop sending the first type of uplink information during DTX, and the corresponding network device 102 may stop receiving the first type of uplink information. Thereby, on the basis of realizing energy saving of the network device 102, unnecessary uplink transmission from the user equipment 101 is reduced, and energy consumption of the user equipment 101 is saved.

Based on the same concept as the above method embodiment(s), the embodiments of the present disclosure also provide an apparatus for sending uplink information, which may have the function(s) of the user equipment 101 in the above method embodiment(s), and may be used to implement the steps performed by the user equipment 101 provided in the above method embodiment(s). The function(s) may be implemented by hardware, or by software or hardware executing corresponding software. The hardware or software includes one or more modules corresponding to the above function(s).

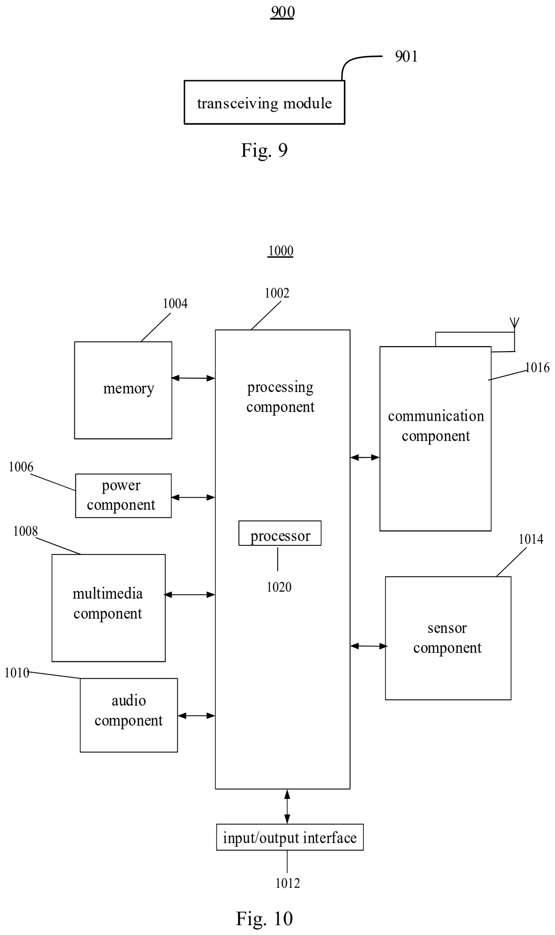

In an implementation, the apparatus 900 shown in Fig. 9 may be used as the user equipment 101 involved in the above method embodiment(s), and implement the steps performed by the user equipment 101 in the above method embodiment(s). As shown in Fig. 9, the apparatus 900 may include a transceiving module 901, where the transceiving module 901 may be used to support the communication device for communication.

When performing the steps implemented by the user equipment 101, the transceiving module 901 is configured to: stop, from the first time, sending the first type of uplink information corresponding to the first carrier to the network device, if the network device is in the effective period of the discontinuous transmission (DTX) on the first carrier.

When the device for receiving uplink information is the user equipment 101, the structure thereof may also be shown in Fig. 10. The device 1000 may be a mobile phone, a computer, a digital broadcast terminal, a messaging device, a game console, a tablet device, a medical device, a fitness device, a personal digital assistant, etc.

Referring to Fig. 10, the device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 generally controls the overall operation of the device 1000, such as operations associated with display, phone calls, data communications, camera operations, and recording operations. The processing component 1002 may include one or more processors 1020 to execute instructions to complete all or some of the steps of the above-mentioned method(s). In addition, the processing component 1002 may include one or more modules to facilitate interaction between the processing component 1002 and other components. For example, the processing component 1002 may include a multimedia module to facilitate interaction between the multimedia component 1008 and the processing component 1002.

The memory 1004 is configured to store various types of data to support operations of the device 1000. Examples of such data include: instructions for any application or method operating on the device 1000, contact data, phone book data, messages, pictures, videos, etc. The memory 1004 may be implemented by any type of volatile or non-volatile storage device or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk, or optical disk.

The power component 1006 provides power to various components of the device 1000. The power component 1006 may include a power management system, one or more power supplies, and other components associated with generating, managing and distributing power for the device 1000.

The multimedia component 1008 includes a screen that provides an output interface between the device 1000 and the user. In some embodiments, the screen may include a Liquid Crystal Display (LCD) and a Touch Panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundary of the touch or slide action, but also detect the duration and pressure associated with the touch or slide operation. In some embodiments, the multimedia component 1008 includes a front camera and/or a rear camera. When the device 1000 is in an operation mode, such as a shooting mode or a video mode, the front camera and/or the rear camera may receive external multimedia data. Each of the front camera and the rear camera may be a fixed optical lens system or have a focal length and optical zooming capability.

The audio component 1010 is configured to output and/or input audio signals. For example, the audio component 1010 includes a microphone (MIC). When the device 1000 is in an operation mode, such as a call mode, a recording mode, and a voice recognition mode, the microphone is configured to receive an external audio signal. The received audio signal may be further stored in the memory 1004 or sent via the communication component 1016. In some embodiments, the audio component 1010 also includes a speaker for outputting audio signals.

The I/O interface 1012 provides an interface between the processing component 1002 and the peripheral interface modules, such as keyboards, click wheels, buttons, etc. These buttons may include, but are not limited to, a home button, a volume button, a start button, and a lock button.

The sensor component 1014 includes one or more sensors for providing various aspects of status assessment for the device 1000. For example, the sensor component 1014 may detect the on/off state of the device 1000, the relative positioning of components (such as display and keypad of the device 1000), the position change of the device 1000 or a component of the device 1000, the presence or absence of user contact with the device 1000, the orientation or acceleration/deceleration of the device 1000, and the temperature change of the device 1000. The sensor component 1014 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an acceleration sensor, a gyroscope sensor, a magnetic sensor, a pressure sensor, or a temperature sensor.

The communication component 1016 is configured to facilitate wired or wireless communication between the device 1000 and other devices. The device 1000 may access a wireless network based on a communication standard, such as WiFi, 2G or 3G, or a combination thereof. In an example embodiment, the communication component 1016 receives a broadcast signal or broadcast-related information from an external broadcast management system via a broadcast channel. In an example embodiment, the communication component 1016 also includes a Near Field Communication (NFC) module to facilitate short-range communication. For example, the NFC module may be implemented based on Radio Frequency Identification (RFID) technology, Infrared Data Association (IrDA) technology, Wltra-Wideband (UWB) technology, Bluetooth (BT) technology, and other technologies.

In an example embodiment, the device 1000 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors or other electronic components to perform the above method(s).

In an example embodiment, a non-transitory computer-readable storage medium including instructions is also provided, such as a memory 1004 including instructions. The instructions may be executed by the processor 1020 of the device 1000 to complete the above method(s). For example, the non-transitory computer-readable storage medium may be a ROM, a Random Access Memory (RAM), a CD-ROM, a magnetic tape, a floppy disk, and an optical data storage device, etc.

Based on the same concept as the above method embodiment(s), the embodiments of the present disclosure also provide an apparatus for receiving uplink information, which may have the function(s) of the network device 102 in the above method embodiment(s), and may be used to execute the steps performed by the network device 102 provided in the above method embodiment(s). The function(s) may be implemented by hardware, or by software or hardware executing the corresponding software. The hardware or software includes one or more modules corresponding to the above function(s).

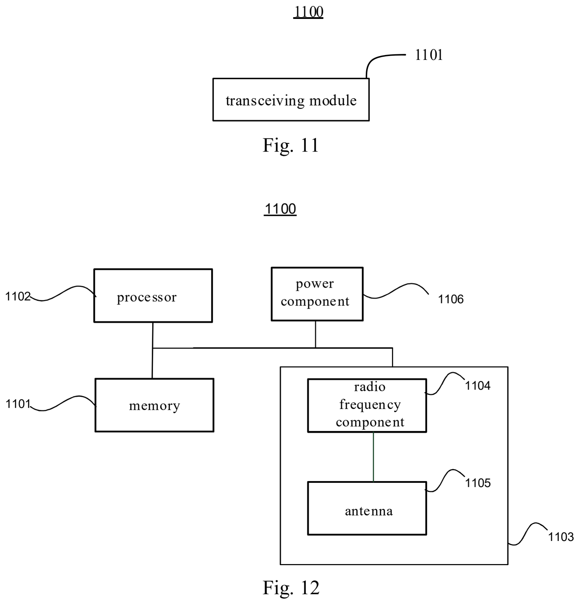

In an implementation, the apparatus 1100 shown in Fig. 11 may be used as the user equipment 101 involved in the above method embodiment(s), and implement the steps performed by the user equipment 101 in the above method embodiment(s). As shown in Fig. 11, the apparatus 1100 may include a transceiving module 1101, where the transceiving module 1101 may be used to support the communication device for communication.

When performing the steps implemented by the network device 102, the transceiving module 1101 is configured to: in response to the effective period of DTX on the first carrier, stop, from the first time, receiving the first type of uplink information from the user equipment on the first carrier.

When the communication device is the network device 102, the structure thereof may also be shown in Fig. 12. The structure of the communication device is described by taking the base station as an example. As shown in Fig. 12, the device 1200 includes a memory 1201, a processor 1202, a transceiving component 1203, and a power component 1206. The memory 1201 is coupled with the processor 1202, and may be used to store the programs and data necessary for the communication device 1200 to implement various functions. The processor 1202 is configured to support the communication device 1200 to perform the corresponding functions in the above method(s), and the functions may be implemented by calling the program stored in the memory 1201. The transceiving component 1203 may be a wireless transceiver, which may be used to support the communication device 1200 to receive signaling and/or data and send signaling and/or data through the wireless air interface. The transceiving component 1203 may also be referred to as a transceiving unit or a communication unit. The transceiving component 1203 may include a radio frequency component 1204 and one or more antennas 1205. The radio frequency component 1204 may be a Remote Radio Unit (RRU), which may be used for transmitting radio frequency signals and converting between radio frequency signals and baseband signals. The one or more antennas 1205 may be used for radiating and receiving radio frequency signals.

When the communication device 1200 needs to send data, the processor 1202 may perform baseband processing on the data to be sent, and then output the baseband signal to the radio frequency unit. The radio frequency unit performs radio frequency processing on the baseband signal, and then sends the radio frequency signal through the antenna in the form of electromagnetic waves. When data is sent to the communication device 1200, the radio frequency unit receives the radio frequency signal through the antenna, converts the radio frequency signal into the baseband signal, and outputs the baseband signal to the processor 1202. The processor 1202 converts the baseband signal into data and processes the data.

After considering the specification and practicing the content disclosed herein, those skilled in the art will easily think of other implementations of the embodiments of the present disclosure. The present disclosure is intended to cover any variation, use or adaptation of the embodiments of the present disclosure, which follows the general principles of the embodiments of the present disclosure and includes common knowledge or customary technical means in the technical field that are not disclosed in the present disclosure. The description and embodiments are to be regarded as examples only, and the true scope and spirit of the embodiments of the present disclosure are indicated by the following claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

### Industrial Applicability

In the method(s) disclosed by the present invention, according to the energy-saving mode of the network device during the DTX period, the user equipment may stop sending the first type of uplink information during the DTX period, thereby reducing unnecessary uplink transmission from the user equipment on the basis of energy saving of the network device and saving energy consumption of the user equipment.

## Claims

1. A method for sending uplink information, performed by a user equipment, the method comprising:
in response to a network device being in an effective period of a discontinuous transmission (DTX) on a first carrier, stopping, from a first time, sending a first type of uplink information corresponding to the first carrier to the network device.

2. The method according to claim 1, wherein the first time is one of:
a start time of the effective period; or
a time which is later than the start time by a first time interval.

3. The method according to claim 1, wherein the first type of uplink information comprises at least one of:
a periodic Channel State Information (CSI) measurement report;
a semi-persistent CSI measurement report;
a periodic uplink Sounding Reference Signal (SRS);
a semi-persistent SRS; or
a Scheduling Request (SR).

4. The method according to any one of claims 1 to 3, wherein the method further comprises:
after a second time, resuming sending a second type of uplink information corresponding to the first carrier, wherein the second type of uplink information is all or some of the uplink information in the first type of uplink information.

5. The method according to claim 4, wherein
the first type of uplink information comprises a semi-persistent CSI measurement report, and the second type of uplink information does not comprise the semi-persistent CSI measurement report.

6. The method according to claim 4, wherein
the first type of uplink information comprises a semi-persistent SRS, and the second type of uplink information does not comprise the semi-persistent SRS.

7. The method according to any one of claims 4 to 6, wherein the first type of uplink information comprises a CSI measurement report, and the second time is one of:
an end time of the effective period; or
a time which is later than the end time by a second time interval.

8. The method according to any one of claims 4 to 6, wherein the first type of uplink information comprises an SRS or an SR, and the second time is one of:
an end time of the effective period; or
a time earlier than the end time.

9. The method according to any one of claims 1 to 3, wherein the first type of uplink information comprises a Scheduling Request (SR), and stopping, from the first time, sending the first type of uplink information corresponding to the first carrier to the network device comprises:
stopping, from the first time, sending a first-priority SR to the network device on the first carrier.

10. The method according to claim 3 or 9, wherein
the Scheduling Request (SR) does not comprise a second-priority SR.

11. The method according to claim 1, wherein the method further comprises:
in response to the user equipment sending an SR to the network device on the first carrier, monitoring, from a third time, downlink information on a second carrier, wherein
in response to the network device being in a DTX state on the second carrier before the third time, the SR sent by the user equipment is used to indicate that the user equipment expects the network device to end the DTX state on the second carrier at the third time.

12. The method according to claim 11, wherein the second carrier is one of:
the first carrier;
a main carrier corresponding to the user equipment; or
any carrier on which the user equipment needs to monitor a Physical Downlink Control Channel (PDCCH).

13. The method according to claim 11, wherein the third time is a time after the user equipment sends the SR on the first carrier.

14. The method according to any one of claims 1 to 13, wherein the method further comprises:
receiving indication information sent by the network device, wherein the indication information is used to indicate the effective period of the DTX.

15. A method for receiving uplink information, performed by a network device, the method comprising:
in response to an effective period of a discontinuous transmission (DTX) on a first carrier, stopping, from a first time, receiving a first type of uplink information from a user equipment on the first carrier.

16. The method according to claim 15, wherein the first time is one of:
a start time of the effective period; or
a time which is later than the start time by a first time interval.

17. The method according to claim 15, wherein the first type of uplink information comprises at least one of:
a periodic CSI measurement report;
a semi-persistent CSI measurement report;
a periodic Sounding Reference Signal (SRS);
a semi-persistent SRS; or
a Scheduling Request (SR).

18. The method according to any one of claims 15 to 17, wherein the method further comprises:
after the second time, resuming receiving the corresponding second type of uplink information on the first carrier, wherein the second type of uplink information is all or some of the uplink information in the first type of uplink information.

19. The method according to claim 18, wherein the first type of uplink information comprises a CSI measurement report, and the second time is one of:
an end time of the effective period; or
a time which is later than the end time by a second time interval.

20. The method according to claim 18, wherein the first type of uplink information comprises an SRS or an SR, and the second time is one of:
an end time of the effective period; or
a time earlier than the end time.

21. The method according to any one of claims 15 to 17, wherein the first type of uplink information comprises a Scheduling Request (SR), and stopping, from the first time, receiving the first type of uplink information from the user equipment on the first carrier comprises:
stopping, from the first time, receiving a first-priority SR on the first carrier.

22. The method according to claim 17 or 21, wherein the method further comprises:
receiving a second-priority SR sent by the user equipment on the first carrier.

23. The method according to claim 15, wherein the method further comprises:
upon receiving the SR sent by the user equipment, ending a DTX state on a second carrier at a third time, and starting, from the third time, to send downlink information on the second carrier.

24. The method according to claim 23, wherein the second carrier is one of:
the first carrier;
a main carrier corresponding to the user equipment; or
any carrier on which the user equipment needs to monitor a Physical Downlink Control Channel (PDCCH).

25. The method according to claim 23, wherein the third time is a time after the user equipment sends the SR on the first carrier.

26. The method according to any one of claims 15 to 25, wherein the method further comprises:
sending indication information to the user equipment, wherein the indication information is used to indicate the effective period of the DTX.

27. An apparatus for sending uplink information, configured in a user equipment, the apparatus comprising a transceiving module, configured to:
in response to a network device being in an effective period of a discontinuous transmission (DTX) on a first carrier, stop, from a first time, sending a first type of uplink information corresponding to the first carrier to the network device.

28. An apparatus for receiving uplink information, configured in a network device, the apparatus comprising a transceiving module, configured to:
in response to an effective period of a discontinuous transmission (DTX) on a first carrier, stop, from a first time, receiving a first type of uplink information from a user equipment on the first carrier.

29. A user equipment, comprising a processor and a memory, wherein
the memory is configured to store a computer program; and
the processor is configured to execute the computer program to implement the method according to any one of claims 1-14.

30. A network device, comprising a processor and a memory, wherein
the memory is configured to store a computer program; and
the processor is configured to execute the computer program to implement the method according to any one of claims 15-26.

31. A computer-readable storage medium, having instructions stored therein, wherein when the instructions are called and executed on a computer, the computer is caused to perform the method according to any one of claims 1 to 14.

32. A computer-readable storage medium, having instructions stored therein, wherein when the instructions are called and executed on a computer, the computer is caused to perform the method according to any one of claims 15 to 26.
